# EUROPEAN PATENT SPECIFICATION

(11) **EP 1 393 619 B1**
(45) Date of publication and mention of the grant of the patent: **20.02.2008**
(21) Application number: 02425531.7
(22) Date of filing: 19.08.2002
(51) Int. Cl.: A01G 25/16, A01G 27/00

(54) **Improved tele-irrigation system**
Verbessertes ferngesteuertes Bewässerungssystem
Système de télé-irrigation amélioré

(43) Date of publication of application: 03.03.2004
(73) Proprietor: Schneider, Luigi, 00153 Rome (IT)
(72) Inventor: Schneider, Luigi, 00153 Rome (IT)
(74) Representative: Sarpi, Maurizio

(56) References cited:
- WO-A-87/04275
- DE-A- 2 707 219
- FR-A- 2 680 629
- US-A- 5 021 939
- US-A- 5 740 031
- US-A- 6 108 590

## Description

The present invention relates to automatic irrigation systems and more particularly a remote control of an irrigation system allowing the opening/closure of electrovalves to be remote controlled according to a predetermined program to throttle the irrigation water flow in the pipes reaching pots and vases, this being obtained by the remote control from a main station controlling the whole irrigation system and its operation and throttling the water delivery in case of failure.

The irrigation of flower vases on balconies and terraces is currently made as follows:
a) irrigation by the owner of the flat;
b) irrigation by an automatic system controlled by a timer and an electrovalve allowing the water flow in the pipes reaching the vases;
c) irrigation by an entrusted operator to whom the key of the flat and the alarm system must be given in most cases.

All of these solutions, however, have some significant drawbacks.
1) In case of irrigation by the owner of the flat, he can find difficult to proportion the quantity of water for each vase;
2) An automatic irrigation system causes, however, a calcification due to water flowing through the pipes that stop sooner or later and can cause floods both in the flat at the same level and the flats below, thus damaging walls and furniture. The emergency intervention of fire-brigade and the demolition of doors is often requested in some cases;
3) If the irrigation is committed to third parties, in addition to the troubles mentioned at 1) the risk is run to expose the flat to the danger of thefts in case the entrusted operator does not carefully close the flat or activate the alarm system again.

WO 87/04275 describes a solution of the problems mentioned above by providing an irrigation system remote controlled by a main station able to control by telematic means the operation of each remote irrigation system and both to open the electrovalves controlling the water flow of the irrigation system at a predetermined time and to close the same at the end of a predetermined period of irrigation time or in case a signal of misoperation is fed to the main station.

The object of the invention is to provide a visual control of the operation of the system with particular reference to the detection of the presence of any loss that may occur independently of the good operation of the electrovalves.

This problem is solved by a remote controlled irrigation system as characterized in claim 1.

Further features and advantages of the invention will be more readily apparent from the following drawing that shows a preferred embodiment thereof.

In the drawing:

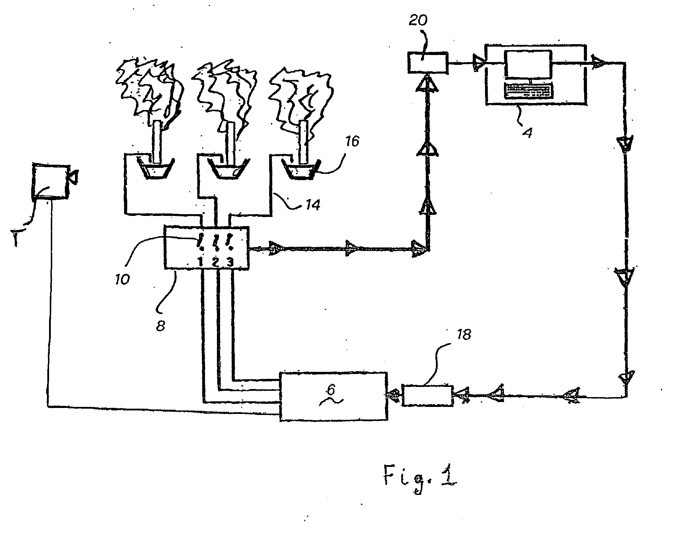

Fig. 1 is a block diagram of the remote controlled irrigation system according to the invention.

With reference to the Figure, the apparatus of remote controlling an irrigation system according to the present invention includes essentially a main station 4 able to remote control via modem 18 a network of electronic control units 6 installed by the single users.

Each electronic control unit 6 is in turn electrically connected to an operation unit 8 of each electrovalve 10 that opens and throttles the water flow to the corresponding pipe 14 reaching the relative vase 16 of the system. A signal of correct operation of the electrovalves 10 is fed by each operation unit 8 through its own modem 20 to main station 4.

Each electronic control unit 6 receives from main station 4 through its own modem 18 both the control signals to open and throttle electrovalves 10 which are generated according to a predetermined control program and any emergency signals able to throttle the main valve controlling the water delivery in case main station 4 has received a failure or misoperation signal from electrovalves 10.

To this end, in a preferred embodiment of the invention the control unit 6 is provided with an electronic video card for video signals able to process black and white or colour signals from a camera T of the waterproof type installed either in the same control unit or at such a position as to take easily the images of the irrigation valves and/or the water outlet nozzles in the single vases. Thus the main station receiving such images can directly monitor any dripping when the electrovalves are closed.

The camera can be remote trained and/or shifted directly from the main station in order to display a particular area of interest.

According to a further feature of the invention each vase is provided with a hygrometer that allows or stop the remote controlled irrigation to a vase according to the humidity of the soil by operating the corresponding electrovalve, thus bypassing the main station.

A preferred embodiment of the present invention has been described above, however, it should be understood that those skilled in the art can make equivalent modifications and/or variations without departing from the scope of the present invention as defined in the appended claims.

## Claims

1. A remote controlled irrigation system wherein there is provided a main station able to control by telematic means the operation of a plurality of remote irrigation systems so as to open the electrovalves controlling the water flow of said irrigation systems at a predetermined time and to close the same at the end of a predetermined period of irrigation time or in case a signal of misoperation is fed to the main station by any irrigation system, **characterized in that** there is provided one or more electronic control units (6) which is/are provided with a video card for video signals able to process video signals from a camera or a microcamera (T) fixed or capable of being trained by the main station and installed at such a position as to take easily the images of the irrigation valves and/or the water outlet nozzles in the single vases.

2. The remote controlled irrigation system according to claim 1, **characterized in that** the main station (4) is connected by telematic means to a plurality of electronic control units (6), each of them controls its own electrovalve operation unit (8) by transmitting to the latter the signals received from main station (4) to open and throttle electrovalves (10) at the times provided by specific irrigation control programs, said operation unit (8) transmitting signals monitoring the operation of the electrovalves through a modem (20) to main station (4) so that in case of a misoperation of the system the main station is able to send an emergency signal to the electronic control unit (6) for throttling the water delivery.

3. The remote controlled irrigation system according to the preceding claim, **characterized in that** said camera or microcamera (T) is of the waterproof type installed in the control unit (6).

4. The remote controlled irrigation system according to any preceding claims, **characterized in that** each irrigation unit includes a hygrometer that allows or stop the remote controlled irrigation to a vase according to the humidity of the soil by operating the corresponding electrovalve (10), thus bypassing the main station (4).

## Patentansprüche

1. Ferngesteuerte Bewässerungsanlage mit einer Hauptstation, mittels welcher durch telematische Mittel der Betrieb einer Vielzahl von Fern-Bewässerungsanlagen derart steuerbar ist, dass sich Elektroventile, welche den Wasserfluss der Bewässerungsanlagen steuern, zu einem vorbestimmten Zeitpunkt öffnen und sich dieselben am Ende einer vorbestimmten Zeitspanne der Bewässerungszeit oder in dem Fall, dass der Hauptstation von einer der Bewässerungsanlagen ein Signal eines Fehlbetriebs zugeführt wird, schließen,
**dadurch gekennzeichnet,**
**dass** eine oder mehrere elektronische Steuereinheiten (6) vorgesehen sind, welche mit einer Videokarte für Videosignale ausgerüstet sind, die dazu geeignet sind, Videosignale von einer Kamera oder einer Mikrokamera (T) zu verarbeiten, die fest oder von der Hauptstation trainierbar vorgesehen ist und an einer derartigen Position installiert ist, die es einfach erlaubt, Bilder von den Bewässerungsventilen und/oder den Wasserauslassdüsen in den einzelnen Vasen vorzunehmen.

2. Ferngesteuerte Bewässerungsanlage nach Anspruch 1, **dadurch gekennzeichnet, dass** die Hauptstation (4) mittels telematischer Mittel mit einer Vielzahl elektronischer Steuereinheiten (6) verbunden ist, wobei jede dieser ihre eigene Elektroventilbetätigungseinheit (8) mittels Übertragen der von der Hauptstation (4) empfangenen Signale an die Elektroventilbetätigungseinheit (8) zum Öffnen und Drosseln der Elektroventile (10) zu den Zeiten, die von definierten Bewässerungssteuerungsprogrammen bereitgestellt werden, steuert, wobei die Betätigungseinheit (8) Signale, welche den Betrieb der Elektroventile überwachen, durch ein Modem (20) an die Hauptstation (4) überträgt, so dass im Fall einer Fehlfunktion der Anlage die Hauptstation in der Lage ist, ein Alarmsignal an die elektronische Steuereinheit (6) zum Drosseln der Wasserabgabe zu senden.

3. Ferngesteuerte Bewässerungsanlage nach dem vorhergehenden Anspruch, **dadurch gekennzeichnet, dass** die Kamera oder Mikrokamera (T) wasserdicht ausgebildet ist und in der Steuereinheit (6) installiert ist.

4. Bewässerungsanlage nach einem der vorhergehenden Ansprüche, **dadurch gekennzeichnet, dass** jede der Bewässerungseinheiten einen Hygrometer aufweist, der die ferngesteuerte Bewässerung an eine Vase in Abhängigkeit von der Feuchtigkeit der Erde mittels Betätigung des entsprechenden Elektroventils (10) freigibt oder stoppt, wodurch die Hauptstation (4) umgangen wird.

## Revendications

1. Système d'irrigation commandé à distance, dans lequel il est prévu un poste principal apte à commander par des moyens télématiques le fonctionnement d'une pluralité de systèmes d'irrigation à distance, de manière à ouvrir les électrovannes régulant l'écoulement d'eau desdits systèmes d'irrigation à un temps prédéterminé et à les fermer à la fin d'une période prédéterminée de temps d'irrigation ou au cas où un signal de défaut de fonctionnement serait délivré au poste principal par un système d'irrigation quelconque, **caractérisé en ce qu'**il est prévu une ou plusieurs unités (6) de commande électronique qui est/sont munies d'une carte vidéo pour signaux vidéo, apte à traiter des signaux vidéo provenant d'une caméra ou d'une microcaméra (T) fixe ou pouvant être orientée par le poste principal et installée à une position lui permettant de prendre aisément les vues des vannes d'irrigation et/ou des buses de sortie d'eau dans les vases uniques.

2. Système d'irrigation commandé à distance selon la revendication 1, **caractérisé en ce que** le poste (4) principal est relié par des moyens télématiques à une pluralité d'unités (6) de commande électronique, chacune d'elles commandant sa propre unité (8) d'actionnement d'électrovanne, en transmettant à celle-ci les signaux reçus en provenance du poste (4) principal pour ouvrir et réguler par étranglement les électrovannes (10) aux moments prévus par des programmes spécifiques de commande d'irrigation, ladite unité (8) d'actionnement émettant des signaux surveillant le fonctionnement des électrovannes, par le biais d'un modem (20), vers le poste (4) principal, de telle sorte qu' en cas de défaut de fonctionnement du système, le poste principal puisse envoyer un signal d'urgence à l'unité (6) de commande électronique pour réguler par étranglement la distribution de l'eau.

3. Système d'irrigation commandé à distance selon la revendication précédente, **caractérisé en ce que** ladite caméra ou microcaméra (T) est du type étanche à l'eau, installé dans l'unité (6) de commande.

4. Système d'irrigation commandé à distance selon l' une quelconque des revendications précédentes, **caractérisé en ce que** chaque unité d'irrigation comprend un hygromètre qui autorise ou arrête l'irrigation commandée à distance vers un vase, en fonction de l'humidité du sol, en actionnant l'électrovanne (10) correspondante, en contournant ainsi le poste (4) principal.
